# EUROPÄISCHE PATENTSCHRIFT

(11) **EP 1 381 466 B1**
(45) Veröffentlichungstag und Bekanntmachung des Hinweises auf die Patenterteilung: **31.05.2006**
(21) Anmeldenummer: 02722001.1
(22) Anmeldetag: 08.03.2002
(51) Int. Cl.: B01L 3/00, G01N 27/28

(54) **ANALYSEEINRICHTUNG**
ANALYSIS DEVICE
DISPOSITIF D'ANALYSE

(30) Priorität: 09.03.2001 DE 10111457
(43) Veröffentlichungstag der Anmeldung: 21.01.2004
(73) Patentinhaber: SIEMENS AKTIENGESELLSCHAFT, 80333 München (DE)
(72) Erfinder: GUMBRECHT, Walter, 91074 Herzogenaurach (DE); STANZEL, Manfred, 91056 Erlangen (DE)
(86) Internationale Anmeldenummer: PCT/DE2002/000837
(87) Internationale Veröffentlichungsnummer: WO 2002/072262

(56) Entgegenhaltungen:
- DE-A- 19 546 535
- DE-C- 19 903 705
- US-A- 5 096 669

## Beschreibung

Die Erfindung bezieht sich auf eine Analyseeinrichtung zur Anwendung in der biochemischen Analytik, mit einem Applikator zum dezentralen Einsatz, enthaltend ein erstes Gehäuse, ein Fluidik-System und einen Sensor-Modul, der zusammen mit einem zweiten Gehäuse ein Mess- und Analysesystem bildet.

Die Dezentralisierung von chemisch-biologischen Analysen in der Medizintechnik erfordert unter anderem eine flexible Bereitstellung von Reagenzien. Dezentral bedeutet in vorliegendem Zusammenhang, dass die Analysen häufig nicht mit hohem Durchsatz wie im klinischen Großlabor durchgeführt werden. Reagenzien für die chemisch-biologische Analyse sind häufig sehr kostspielig und in ihrer Lebensdauer/Verwendbarkeit, zumindest nach Öffnen des Behältnisses, z.B. Ausgasen von O₂ und CO₂ aus Blutgas-Kalibrierlösungen oder Zersetzung von biochemischen Komponenten, stark eingeschränkt, so dass eine effiziente, kostengünstige Nutzung erschwert bzw. unmöglich wird.

Dezentrale Analysen werden deshalb besonders vorteilhaft mit sog. Einmal-Kits durchgeführt, bei welchen die Reagenzien in einer vordosierten, individuell verpackten, gerade benötigten Menge bereitgestellt werden. Bekannt ist z.B. ein System (i-STAT Corporation, 303A College Road East, Princeton, New Jersey 08540; US Patent Nr. 5 096 669), bei dem eine zur Kalibrierung von Blut-Gas/-Elektrolyt-Sensoren benötigte Kalibrierlösung in einem gasdichten Alu/Kunststoffbeutelchen mit einem Inhalt < 1 ml für einen Einmalsensor bevorratet und im Betrieb des Einmalsensors durch "Anstechen" der Beutelwand geöffnet wird.

Ein derartiges Konzept der Bereitstellung von Kalibrierlösungen ist nicht geeignet bei Verwendung von Reagenzien, die in gelöster Form einem Verfallsprozess ausgesetzt sind, wie z. B. Enzyme, empfindliche organische Stoffe, wie insbesondere p-Aminophenylphosphat, p-Aminophenyl-β-Galactosid. Diese Vorgehensweise ist außerdem aufwendig und teuer, ferner besteht das Risiko, dass die Beutelchen undicht sein könnten und somit z.B. austretende Gase die gesamte Diagnostik bei der Blutgasanalyse verfälschen. Weiterhin wird beim Stand der Technik nur eine einzige Kalibrierlösung realisiert und somit nur eine Einpunkt-Eichung ermöglicht, was die Verlässlichkeit der Ergebnisse in Frage stellt und somit die Akzeptanz beim Kunden reduziert. Zwar ist in US 5 096 669 A die theoretische Möglichkeit der Bereitstellung von mehr als einer Kalibrierlösung erwähnt; dies würde aber die Komplexität und damit die Herstellungskosten des Einmalartikels erhöhen.

Weiterhin ist in der US 5 096 669 A die Möglichkeit der Zumischung von trockenen Reagenzien zur Probe, d.h. z.B. zur Blutprobe, erwähnt. Dies löst aber nicht die Probleme der Reagenzienbereitstellung, wenn für komplexe Diagnosevorgänge mehrere Reagenzlösungen seriell vor und/oder nach Zutritt der Probenflüssigkeit über eine Sensoreinrichtung, z.B. einem Sensor-Chip oder Sensor-Modul, geführt werden müssen, beispielsweise bei Analysen unter Zuhilfenahme von sog. enzymatischer Verstärkung: Dabei erfolgt eine sequenzielle Zuführung von 1. Pufferlösung, 2. Probe, 3. Pufferlösung, 4. Enzym-Label-Reagenz, 5. Pufferlösung, 6. Enzym-Substrat.

Weiterhin wird in Dirks, G. et al. "Development of a disposable biosensor chipcard system", Sens. Technol. Neth., Proc. Dutch Sens. Conf, 3^{rd} (1988), S. 207 bis 212, ein Messsystem für biomedizinische Anwendungen beschrieben, bei dem eine sogenannte Chipkarte aus einem Flachbehälter mit mehreren Kavitäten und einem System von Flüssigkeitskanälen realisiert wird, wobei in das Kanalsystem ein ISFET eingebracht ist, der als Sensor dient. Bei diesem System geht es insbesondere darum, aus separaten Behältern eine Messflüssigkeit einerseits und eine Kalibrier- bzw. Reagenzflüssigkeit zum Sensor separat zuzuführen. Des Weiteren werden in der Monographie Langereis, G.R. "An integrated sensor system for monitoring washing process, ISBN 90, Systeme mit Sensoren beschrieben, bei denen es um die Integration von Sensoren, deren Signale elektrisch abgegriffen werden, in Fluidikeinrichtungen geht.

Die Probleme der Reagenzzuführung sind beim Stand der Technik nicht befriedigend gelöst. Ausgehend vom Stand der Technik ist es daher Aufgabe der Erfindung, eine Analyseeinrichtung der eingangs genannten Art für eine dezentrale Anwendung zu verbessern.

Die Aufgabe ist erfindungsgemäß durch die Merkmale des Patentanspruches 1 gelöst. Weiterbildungen sind in den abhängigen Patentansprüchen angegeben. Insbesondere sind auch geeignete Anwendungsmöglichkeiten der erfindungsgemäßen Analyseeinrichtung angegeben.

Bei der Erfindung werden im Applikator die Reagenzien als Feststoff vorportioniert in einem Mikrofluidik-System bereitgehalten und in Kombination mit einer geeigneten Betriebsweise insbesondere aus einem einzigen Lösungsmittel-Reservoir für mindestens einen gesamten Analyse-Durchlauf, bestehend aus mehreren Teilschritten, automatisch gelöst und dem Analysesystem zugeführt. Die Reagenzlösungen werden also im zugeführten Lösungsmittel ,in situ` erzeugt und erst unmittelbar vor ihrer Verwendung bereitgestellt.

Mit der Erfindung wird vorteilhafterweise - im Gegensatz zum Stand der Technik - eine technische Realisierung von mehreren Reagenzlösungen aus nur einem Lösungsmittel-Reservoir für mindestens einen Analyse-Durchlauf erreicht. Beim Stand der Technik und speziell in der US 5 096 669 A wird nicht ausgeführt, ob und insbesondere wie eine sequenzielle Bereitstellung von mehreren, unterschiedlichen Reagenzlösungen aus trockenen Reagenzien erfolgen könnte.

Bei der Erfindung werden die Reagenzien vorzugsweise in fester Form bzw. gelöst in einem festen Hilfsstoff, z.B. wasserlösliches Polymer, bereitgehalten. Ein Beispiel ist die Bereitstellung von Mitteln zur Vorgabe eines definierten pCO₂₋Wertes für die medizinische Diagnostik: Dazu wird neben den benötigten Salzen, wie u.a. NaCl und KCl auch eine Feststoff-Base, z.B. NaHCO₃ sowie eine Feststoff-Säure, z.B. Zitronensäure, vorgelegt. Beim Auflösen der Reagenzien reagieren die Feststoff-Base und Feststoff-Säure wie beispielsweise beim Stand der Technik von Brause-Tabletten bekannt und erzeugen eine definierte Menge CO₂. Da deutlich geringere Konzentrationen als bei Brause-Tabletten benötigt werden, erfolgt keine Blasenbildung.

Weiterhin ist die Bereitstellung von mehreren Reagenzlösungen bei komplexen Analysen-Durchläufen möglich. Ein vorteilhaftes Beispiel ist ein Immuno-Assay mit enzymatischer Verstärkung. Dabei muss nach Aufbringen der Probenflüssigkeit auf den Sensor bzw. einem Sensor-Modul evtl. ein Wasch-Schritt mit Pufferlösung erfolgen. Diese kann entweder direkt aus dem Reservoir oder vorteilhaft durch Auflösen von fester Puffer-Substanz, beispielsweise gelöst in wasserlöslichem Polymer und platziert in einem Mikrodurchflusskanal aus einem Wasser-Reservoir, der im Applikator oder im zweiten Gehäuse platziert sein kann, erfolgen. Dann folgt die Zufuhr von Enzym-Label und zwar vorteilhafterweise ebenfalls als Feststoff, gegebenenfalls gelöst in wasserlöslichem Polymer im Mikrodurchflusskanal platziert, das nun seinerseits aus dem Puffer-Reservoir oder vorteilhaft aus dem gleichen Wasser-Reservoir gelöst wird. Schließlich erfolgt in Analogie zu den vorhergehenden Schritten die Herstellung und Zufuhr von Enzym-Substrat-Lösung.

Chemische Gleichgewichte sowie die Reaktionsgeschwindigkeit chemischer bzw. biochemischer enzymatischer Reaktionen unterliegen einem starken Temperatureinfluss. So sind z.B. die Partialdrücke der gelösten Blutgase O₂ und CO₂ von der Temperatur abhängig und werden deshalb bei Laborgeräten, den sog. Blutgas-Analysatoren, stets bei 37°C gemessen. Mit Sensoren auf der Basis von Siliziumtechnologie und mikroelektronischer Schaltungstechnik ist es nunmehr möglich, die Temperatur des Sensorchips und damit auch die Temperatur der Probe zu messen als auch zu regeln. Eine Einschränkung bestand dabei bisher in der Tatsache, dass man einen Silizium-Chip zwar elektrisch aufheizen kann, z.B. durch Widerstandsheizung, jedoch nicht elektrisch kühlen kann. Dies wird durch eine vorteilhafte Weiterbildung der Erfindung erreicht.

Eine weitere vorteilhafte Anwendungsmöglichkeit der Erfindung ist die Amplifikation von DNA/RNA (Desoxyribo-nukleinsäure/Ribonukleinsäure)-Proben mittels der exponentiellen Vervielfältigungsmethode bei der sog. PCR(Polymer Chain Reaction), d.h. der Polymerase-Kettenreaktion-Methode. Dazu muss die Probenflüssigkeit 20 bis 40 mal zwischen zwei Temperaturen, typischerweise zwischen 40°C und 95°C, zyklisiert werden. Nach dem Stand der Technik ist bei dieser Thermozyklisierung der Abkühlungsprozess geschwindigkeits-bestimmend.

Auch letztere Probleme können mit der Erfindung in praxisgerechter Weise gelöst werden: Für eine konkrete Anwendung kommt als Applikator eine besonders vorteilhafte Ausführungsform nach Art des Chip-Moduls einer Chip-Karte in Betracht.

Beim Chipkarten-Modul ist der Silizium-Chip vorteilhafterweise auf einer nur etwa 50 µm dicken, vergoldeten Kupferschicht montiert. Es handelt sich dabei um das mittlere Metall-Feld von bekannten Chipkarten-Modulen, das für elektrische Kontaktierungen im Karten-Lesegerät dort nicht benutzt wird. Dieses freie Feld kann somit im Kartenlesegerät, das hier gleichermaßen als Auswertegerät fungiert, genutzt werden, um direkt ein Kühlelement, z.B. einen Peltierkühler, an die entsprechende Stelle des Chipkarten-Moduls zu kontaktieren. Aufgrund der Platzierung (50 µm metallischer Kontakt zum Chip) ist somit ein effizienter Wärmeübergang möglich, so dass eine definierte Temperatur, insbesondere auch durch Abkühlung, sehr schnell einstellbar ist.

Weitere Vorteile und Einzelheiten der Erfindung ergeben sich aus der nachfolgenden Figurenbeschreibung von Ausführungsbeispielen anhand der Zeichnung in Verbindung mit den Patentansprüchen. Es zeigen
- Figur 1: bis Figur 3 drei verschiedene Ausführungsformen eines sog. Diagnose-Kits aus Applikator und Auslesegerät in Schnittdarstellung,
- Figur 4: in Schnittdarstellung ein Auslesegerät mit integriertem Kühlelement zur direkten thermischen Ankopplung an ein Chipkarten-Kontaktierungsfeld,
- Figur 5: die Draufsicht auf das Kontaktierungsfeld des Moduls gemäß Figur 4,
- Figur 6: in Draufsicht eine Proben- und Mehrkanal-Reagenzienzuführung mit Verteilungssystem im Auslegegerät und
- Figur 7: und Figur 8 in Draufsicht eine gegenüber Figur 6 abgewandelte Mehrkanalreagenzzuführung durch Verschieben der Chipkarte in zwei Positionen.

In den Figuren sind gleiche bzw. gleich wirkende Teile mit den gleichen bzw. sich entsprechenden Bezugszeichen versehen. Die Figuren werden teilweise gemeinsam beschrieben.

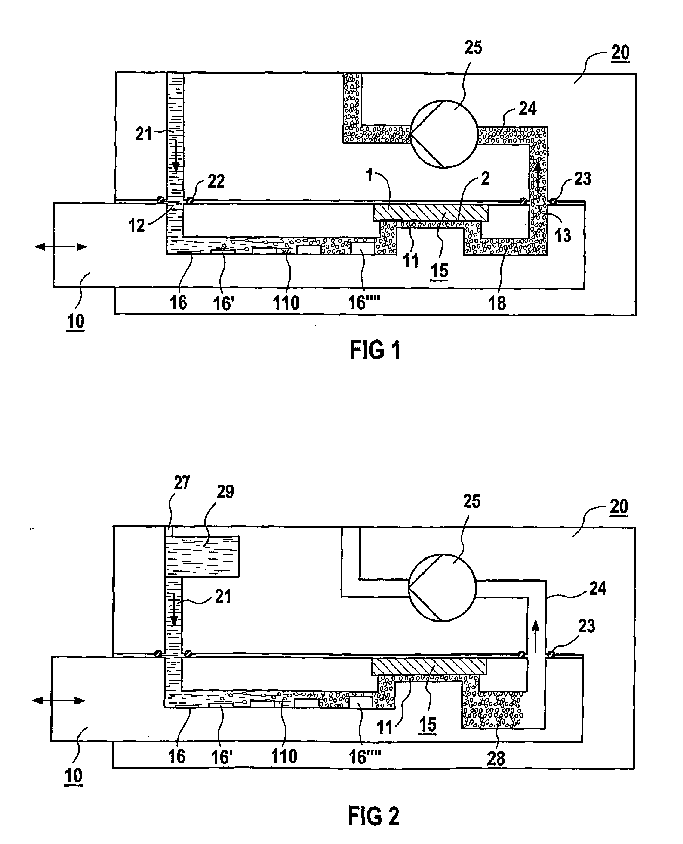

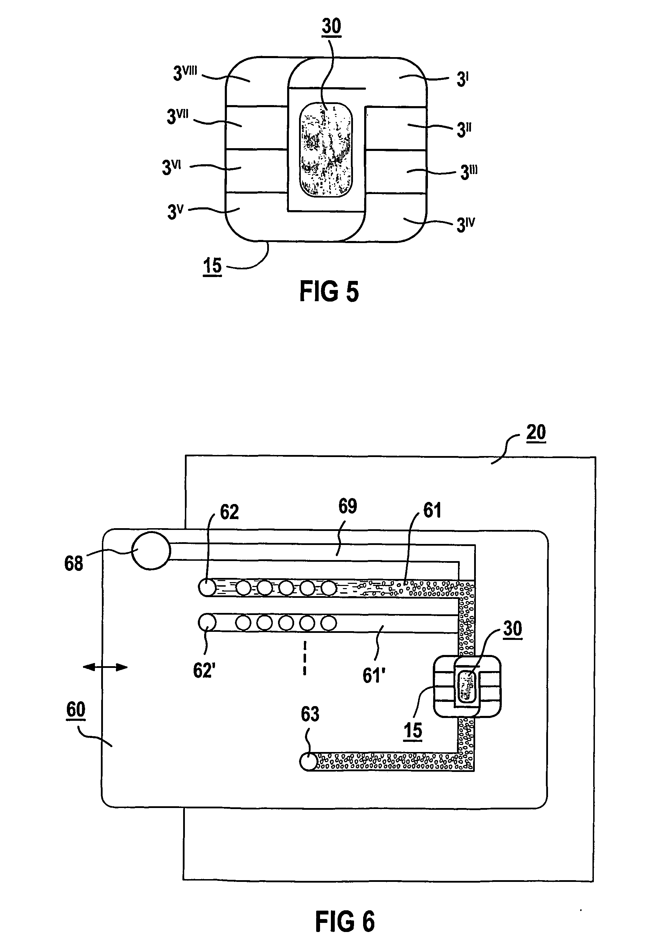

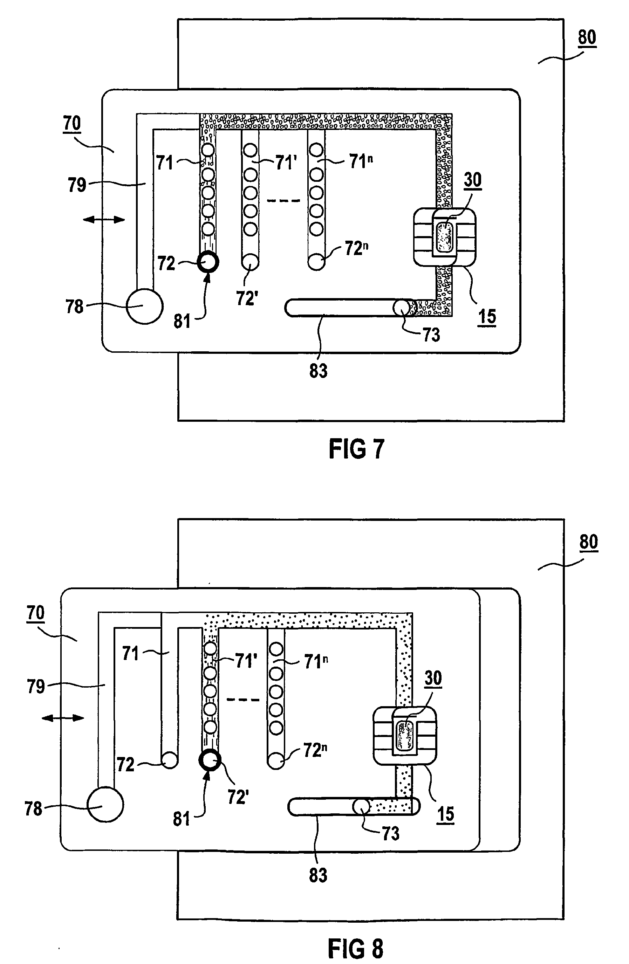

In den Figuren 1 bis 4 ist ein Applikator mit Sensor-Modul durchgehend mit 10 bezeichnet, während in den Figuren 6 und 7 ein modifizierter Applikator mit 60 oder 70 bezeichnet ist. Zur Messung wird ein derartiger Applikator 10, 60 bzw. 70 in ein Auslesegerät 20 bzw. 80 eingeschoben.

In den Figuren 1 bis 3 ist im Applikator 10 ein Sensor-Modul 15 eingebracht, beispielsweise ein Silizium-Chip 1 mit sensitiver Fläche 2, verkapselt und elektrisch kontaktiert auf einem Träger. Ein solches Sensor-Modul ist u.a. Gegenstand einer korrespondierenden Patentanmeldung mit gleicher Priorität. Am Sensor-Modul 15 ist ein Mikrofluidikkanal 11 vorhanden, zu dem von einem Einlass 12 mit Ventilanordnung/Dichtung ausgehend ein Kanal 110, in dem Reagenzien bzw. Hilfsstoffe 16, 16', ..., 16''' angeordnet sind, führt. Hinter dem Sensor-Modul 15, d.h. nach der Messung, wird die Substanz von einen Auslasskanal 18 aufgenommen.

Das Auslesegerät 20 hat im Gehäuse Fluidikkanäle 21, wobei in dem ersten Kanal 21 beispielsweise Wasser von einem Lösungsmittelvorrat außerhalb oder innerhalb des Gerätes über eine Dichtung 22 in den Applikator 10 gebracht wird. Über die Dichtung des Auslasses 23 wird mittels einer Pumpe 25 die verbrauchte Messflüssigkeit zu einem in der Figur 1 nicht dargestellten Abfallbehälter innerhalb oder außerhalb des Auslesegerätes gepumpt.

Die Anordnung gemäß Figur 2 entspricht im Wesentlichen der Figur 1 mit den Abwandlungen, dass im zweiten Gehäuse des Auslesegerät ein Lösungsmittel-Reservoir 29 platziert ist und nach dem Sensor-Modul 15 der Mikrofluidkanal 11 eine Erweiterung bzw. Verlängerung als Sammelbehälter 28 zwecks Aufnahme der verbrauchten Lösung bzw. analysierten Probe hat. Gegebenfalls ist eine solche Erweiterung als Reservoir für Abfall hinreichend. In das Auslesegerät gelangt in diesem Fall mittels der Pumpe 25 über den Auslass 13 mit Ventilen bzw. Dichtungen 13 bzw. 23 nur Luft.

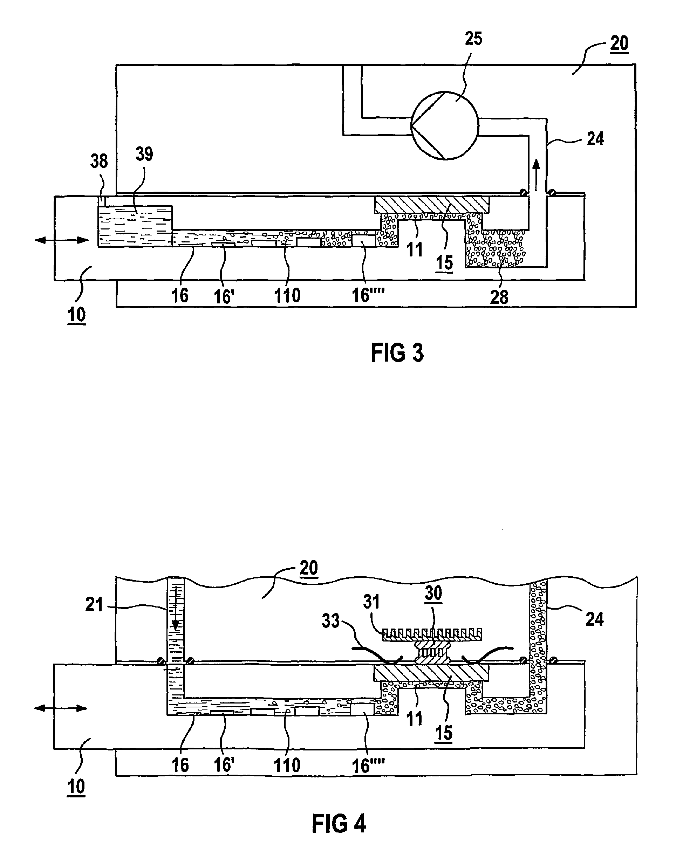

In entsprechender Weiterbildung beinhaltet der Applikator 10 gemäß Figur 3 einen separaten Behälter 39 für einen Lösungsmittelvorrat, d.h. für Wasser. Die Wasserzufuhr vom externen Gerät 20 ist dabei nicht notwendig. Es ist lediglich das Ventil 12 aus Figur 1 speziell als Belüftungsventil 38 ausgebildet.

In der Figur 4 ist der Applikator mit Sensor-Modul im Wesentlichen entsprechend Figur 1 ausgebildet. Speziell im Auslesegerät ist an der Position des Sensor-Moduls 15 bei eingeschobenem Applikator ein Heiz- und/oder Kühl-Element z.B. ein Peltierelement 30 angeordnet. Das Peltierelement 30 hat ein Kühlblech 31. Mit dem Peltierelement 30 ist eine effektive und schnelle Kühlung des Sensor-Moduls 15 auf eine definierte Temperatur möglich.

Diese Anordnung kann vorzugsweise auch eingesetzt werden zur Amplifikation von DNA/RNA(Desoxyribonukleinsäure/Ribonukleinsäure) mittels der exponentiellen Vervielfältigungs-Methode der sog. PCR(Polymer Chain Reaction). Dazu werden die DNA/RNA-Probe sowie benötigte Reagenzien wie z.B. Nukleotidtriphosphate, Primer-DNA und Polymerase in Pufferlösung über die mikrofluidischen Kanäle der sensitiven Fläche des Sensorchips zugeführt. Der Reaktionsraum (Raum über der sensitiven Fläche des Chips mit einer Höhe von bis zu wenigen hundert µm) wird dann circa 20 bis 40 mal zwischen zwei Temperaturen, typischerweise zwischen 40°C und 95°C, zyklisiert. Bei dieser Anordnung kann der gesamte DNA/RNA-Vervielfältigungsprozess in wenigen Minuten durchgeführt werden.

Die Funktionsweise des Chip-Moduls 15 und insbesondere des eigentlichen Sensor-Chips wird in Figur 5 verdeutlicht. Auf der elektrischen Kontaktseite 3, d.h. der Rückseite des Moduls 15 mit Sensor-Chip 1, sind Kontaktierungsfelder 3^{I}, ... , 3^{VIII} als einzelne Anschlüsse ersichtlich, die den üblichen Kontaktierungen für kartenintegrierbare Chips entsprechen. Auf der sensitiven Seite 2 des Chips 1 verlaufen von Bond-Pads aus den Ecken des Chips zu den Kontakten der Kontaktierungsfelder 3^{I}, ..., 3^{VIII}.

Letztere Anordnung ist Gegenstand einer parallelen Anmeldung (EPA-A-1366361) mit gleichem Prioritätsdatum (DE-AZ-101 11 458 5-52 vom 09.03.2001).

Aus Figur 5 ist in der Draufsicht ersichtlich, dass für den Fall der Chipkarten-Technologie mit Silicium-Chip und rückseitigen Flächenkontakten 3^{I} bis 3^{VIII}, wie es von üblichen Chipkarten bekannt ist, das Peltierelement 30 unmittelbar rückseitig die wirksame Fläche des Sensors berührt und somit einen effektiven Wärmeübergang bewirkt.

In der Figur 6 ist in der Draufsicht eine Chipkarte 60 dargestellt, die ein Sensor-Modul 15 mit rückseitigem Peltierelement 30 und elektrischen Chip-Kontakten 3' bis 3^{VIII} aufweist. Es ist ein Proben-Port 68 als Probenzugabeöffnung sowie ein Probenkanal 69 zur Zuführung der Probe zum Sensor-Modul 15 vorhanden. Außerdem sind Reagenzkanäle mit nichtflüchtigen Reagenzien in vordosierter Menge vorhanden. Es ist ein erster Reagenzkanal 61 vorhanden, der mit einem Wassereinlass 62 verbunden ist. Weiterhin ist ein zweiter Reagenzkanal 61 vorhanden, der parallel zum ersten Reagenzkanal 61 verläuft und in der Darstellung der Figur 6 im Gegensatz zum Reagenzkanal 61 noch nicht mit Lösungsmittel gefüllt ist und somit noch keine Reagenzlösung enthält. Der zweite Reagenzkanal 61' ist mit einem zweiten Wassereinlass 62' verbindbar. Es können weitere parallelgeschaltete Reagenzkanäle 61" mit Wassereinlässen 62" vorgesehen sein, die jeweils parallelgeschaltet sind, so dass insgesamt n-Reagenzkanäle und n-Wassereinlässe vorhanden sind. Nach dem Vorbeiströmen am Sensor-Modul 15 ist ein Auslass 63 vorhanden. Im Auslesegerät 20 ist ein Wasserverteilungssystem mit Ventilen vorhanden.

Anhand zweier Teilfiguren 7 und 8 ist die Funktionsweise einer gegenüber der Anordnung von Figur 6 abgewandelten Anordnung verdeutlicht. Auf dem Applikator 70 sind wiederum als Proben-Port eine Probenzugabeöffnung 78, sowie ein Probenkanal 79 zur Zuführung der Probe zum Sensor-Modul 15 vorhanden. Weiterhin sind Reagenzkanäle 71 bis 71n' vorhanden und ein Auslass 73. Bei dieser Anordnung ist ein einziger Zuflusskanal im Auslesegerät 80 vorhanden, der eine einzige Zuflussöffnung 81 und eine einzige Auslassöffnung 83 aufweist. In der Position gemäß Figur 7a befindet sich der erste Reagenzkanal 71 in Deckung mit der Zuflussöffnung 81, während in der Position b sich der zweite Reagenzkanal 71' in Deckung mit der Zuflussöffnung 81 befindet. Die Auslassöffnung 83 ist in diesem Fall als Schlitzöffnung ausgebildet, so dass in beiden Positionen des Applikators und auch in weiteren Positionen immer der Auslass 73 zum Auslass 83 des Auslesegerätes 80 möglich ist.

Bei den beschriebenen Anordnungen ist für das mikrofluidische Analyse/Diagnosesystem wesentlich, dass eine Bevorratung je einer definierten Menge von mindestens einem Reagenz, eine Bevorratung des Reagenz in einer lagerstabilen Form, eine Bevorratung des Reagenz als reiner Feststoff oder eine Bevorratung des Reagenz gelöst oder gemischt in einem weiteren Stoff (Hilfsstoff) möglich ist. Ein solcher Hilfsstoff kann fest oder flüssig sein. Ein fester Hilfsstoff kann z.B. ein wasserlösliches Polymer wie Polyvinylalkohol sein. Der Hilfsstoff kann dazu dienen, Reagenz zu verdünnen (z.B. beim Einsatz von Enzymen, die in sehr geringen Mengen eingesetzt werden sollen) und/oder geometrisch definiert sowie gut haftend im Behältnis zu platzieren.

Unabhängig von der Darstellung in den Figuren weist der Applikator als Plastikgehäuse eine definierte Geometrie auf. Im Plastikgehäuse sind Mikrokanäle mit z.B. 1 mm x 0,1 mm Querschnitt und einige mm Länge, die ein Fluidsystem bilden. Im Hilfsstoff gelöstes Reagenz kann in einem definierten Mengen-Gradienten entlang eines Mikrokanals platziert werden. Das Plastikgehäuse kann einen definierten Vorrat an Lösungsmittel enthalten. Weiterhin kann das Plastikgehäuse ein definiertes Leer-Volumen zur Entsorgung des Abfalls enthalten.

Bei allen Beispielen erlauben das Plastikgehäuse als Applikator in Verbindung mit Auslesegerät und die geeignete Betriebsweise die Zusammenführung von Reagenz und Lösungsmittel. Das Plastikgehäuse wird mit mindestens einem Mikrokanal an ein Auslesegerät angeschlossen. Das Auslesegerät enthält einen Vorratsbehälter, in dem sich im einfachsten Fall Wasser befindet, ausreichend für mehrere Analysen. Das Auslesegerät kann Behälter zur Entsorgung des Abfalls von mehreren Analysen enthalten und enthält weiterhin Mittel zur Förderung des Lösungsmittels durch die Mikrokanäle zum Sensor-Modul und weiter zum Abfallbehälter im Plastikgehäuse oder im Auslesegerät. Das Lösungsmittel, egal aus welchem Vorrat, wird derart über die geometrisch platzierte Reagenz-Hilfsstoffmischung geführt, dass eine definierte Lösung entstehen kann, unter Umständen durch Verweilen des Lösungsmittels über dem Feststoff, vor und zurückpumpen, Erwärmen od. dgl..

Auf diese beschriebene Weise können auch unkritische ReagenzLösungen, wie Puffer-Lösungen od. dgl., im Analyse-Kit generiert werden. Lagerstabile Pufferlösungen könnten zwar auch aus einem Vorratsbehälter im Auslesegerät zugeführt werden, jedoch sind die Schnittstellen zwischen Auslesegerät und Applikator bei entferntem Applikator anfällig für Verdunstung des Lösungsmittels und somit Ausfällung von Feststoff (z.B. Salz) und Verschmutzung/Verkrustung der Fluidik-Schnittstellen. Dies ist im Falle einer reinen Lösungsmittelbevorratung im Auslesegerät nicht zu befürchten. Außerdem können durch diese Methode auf einfache Weise mehrere Reagenzlösung durch Parallelisierung der Reagenzkanäle aus lediglich einem Lösungsmittel-Reservoir realisiert werden.

Ein besonderer Fall liegt bei der Reagenz-Bereitstellung für Sensoren von gelösten Gasen vor, z.B. bei Sensoren zur Bestimmung von den Blutgasen Sauerstoff und Kohlendioxid. Hier müssen die Sensoren mit Medien, z.B. Lösungen, geeicht werden, die eine definierte Konzentration der jeweiligen Gase aufweisen.

Im Fall von Blutgassensoren, die z.B. für die sog. "Point of Care Diagnostik" vor ihrem einmaligen Gebrauch einmal geeicht werden müssen, müssen die Sensoren für pO₂ sowie pCO₂ mit Pufferlösungen von bekannten pO₂ sowie pCO₂-Werten in Kontakt gebracht werden. Während beim Stand der Technik eine einzige, bereits bei der Herstellung des Moduls zubereitete Lösung mit bekannten pO₂- und pCO₂-Werten in ein kleines gasdichtes Beutelchen eingefüllt und in das Diagnose-Modul eingesetzt wird, kann nunmehr die Eichung beliebig, insbesondere als Zweipunkt-Eichung, erfolgen.

Es ist somit eine Analyseeinrichtung geschaffen, die in der biochemischen Analytik z.B. für den Einsatz in der medizinischen Diagnostik, der Forensik, für die Lebensmittelüberwachung sowie für die Umweltmesstechnik in vielfältiger Weise einsetzbar ist. Die dezentrale Anwendung von Applikator und Auslesegerät erlaubt insbesondere in der Klinik und beim niedergelassenen Arzt eine zeitsparende kostengünstige Vor-Ort-Untersuchung von z.B. Blut, Liquor, Speichel und Abstrichen nach z.B. Erregern von Infektionskrankheiten. Dabei kann, falls erforderlich, nicht nur eine einfache Typisierung der Keime sondern auch die Bestimmung etwaige Antibiotikaresistenzen erfolgen, was die Qualität der Therapie deutlich verbessert und damit die Krankheitsdauer und -Kosten reduzieren kann. Neben der Diagnose von Infektionskrankheiten eignet sich das Diagnosesystem in der Medizin z.B. auch zur Blutgas/Blutelektrolytanalyse, zur Therapiekontrolle, zur Früherkennung von Krebs sowie zur Bestimmung genetischer Prädispositionen.

## Patentansprüche

1. Analyseeinrichtung zur Anwendung in der biochemischen Analytik, mit einem Applikator (10,60,70) zum dezentralen Einsatz, enthaltend ein erstes Gehäuse, ein Mikrofluidik-System (11,12,13,110) und ein Sensor-Modul (15), der zusammen mit einem zweiten Gehäuse ein Mess- und Analysesystem bildet, wobei das Sensormodul eine mikrofluidisch zugängliche, sensitive Fläche aufweist, **dadurch gekennzeichnet, dass** im Mikrofluidik-System (11, 12, 13; 110) des Applikators (10, 60, 70) mit dem Sensor-Modul (15) Reagenzien in vorportionierter Menge als feste, nichtflüchtige Stoffe vorhanden sind und dass das Mikrofluidik-System (11, 12, 13; 110) eine Verbindung zu einem Lösungsmittel-Reservoir (29, 39) zwecks automatischer Bereitstellung von Lösungsmittel und Auflösung der portionierten Menge an festem Reagenz aufweist, wobei wenigstens eine aus dem Reagenz und dem Lösungsmittel hergestellte Reagenzlösung der sensitiven Fläche (2) des Sensor-Moduls (15) zuführbar ist.

2. Analyseeinrichtung nach Anspruch 1, **dadurch gekennzeichnet, dass** das Sensormodul (15) rückseitig ein elektrisches Kontaktierungsfeld zur Zuführung und Abnahme von elektrischen Signalen aufweist.

3. Analyseeinrichtung nach Anspruch 1, **dadurch gekennzeichnet, dass** das Lösungsmittel-Reservoir (29) im dem Applikator (10, 60, 70) zugeordneten zweiten Gehäuse (20, 80) mit Auslesegerät angeordnet ist.

4. Analyseeinrichtung nach Anspruch 1, **dadurch gekennzeichnet, dass** das Lösungsmittel-Reservoir (39) im Applikator (10, 60, 70) angeordnet ist.

5. Analyseeinrichtung nach Anspruch 1, **dadurch gekennzeichnet, dass** im Applikator (10, 60,70) je eine definierte Menge unterschiedlicher Reagenzien vorhanden ist.

6. Analyseeinrichtung nach Anspruch 1 , **dadurch gekennzeichnet, dass** die Reagenzien in einer lagerstabilen Form bevorratet sind.

7. Analyseeinrichtung nach Anspruch 1, **dadurch gekennzeichnet, dass** wenigstens ein Reagenz als reiner Feststoff bevorratet ist.

8. Analyseeinrichtung nach Anspruch 1, **dadurch gekennzeichnet, dass** wenigstens ein Reagenz gelöst oder gemischt in einem Hilfsstoff bevorratet ist.

9. Analyseeinrichtung nach Anspruch 8, **dadurch gekennzeichnet, dass** der Hilfsstoff fest ist.

10. Analyseeinrichtung nach Anspruch 9, **dadurch gekennzeichnet, dass** der Hilfsstoff ein wasserlösliches Polymer ist.

11. Analyseeinrichtung nach Anspruch 8, **dadurch gekennzeichnet, dass** mit dem Hilfsstoff das Reagenz verdünnt und/oder geometrisch definiert, gut haftend in einem Behältnis des Applikators (10, 60, 70) platziert ist.

12. Analyseeinrichtung nach Anspruch 11, **dadurch gekennzeichnet, dass** das Behältnis im Applikator (10, 60, 70) eine definierte Geometrie aufweist, beispielsweise als Mikrokanal (11) mit definiertem Querschnitt und definierter Länge.

13. Analyseeinrichtung nach Anspruch 12, **dadurch gekennzeichnet, dass** das in einem Hilfsstoff gelöste Reagenz in einem definierten Mengen-Gradienten entlang des Mikrokanals (11) platziert ist.

14. Analyseeinrichtung nach Anspruch 1, **dadurch gekennzeichnet, dass** der Applikator (10, 60, 70) mit erstem Gehäuse eine mit mikrofluidischen Komponenten versehene Plastikkarte ist.

15. Analyseeinrichtung nach Anspruch 14, **dadurch gekennzeichnet, dass** die Plastikkarte (10, 60, 70) eine Chip-Karte ist.

16. Analyseeinrichtung nach Anspruch 15, **dadurch gekennzeichnet, dass** das zweite Gehäuse (20, 80) ein Auslesegerät mit einer Auswerteeinheit realisiert, in das der Applikator (10, 60, 70), enthaltend das erste Gehäuse und das Sensor-Modul (15), einführbar ist.

17. Analyseeinrichtung nach Anspruch 16, **dadurch gekennzeichnet, dass** der Applikator (10, 60, 70) in Verbindung mit dem Auslesegerät (20, 80) bei vorgegebener Betriebsweise die Zusammenführung von Reagenz und Lösungsmittel erlaubt.

18. Analyseeinrichtung nach einem der vorhergehenden Ansprüche, **dadurch gekennzeichnet, dass** der Applikator (10, 60, 70) über mindestens einen Mikrokanal (11) an das Auslesegerät (20, 80) angeschlossen ist.

19. Analyseeinrichtung nach Anspruch 18, **dadurch gekennzeichnet, dass** das Lösungsmittel-Reservoir (29) im Auslesegerät (20, 80) zur Aufnahme des Lösungsmittels, z.B. Wasser, für mehrere Analysen ausgebildet ist.

20. Analyseeinrichtung nach Anspruch 18, **dadurch gekennzeichnet, dass** ein Behälter (28) zur Entsorgung von Probenmaterial und verbrauchten Reagenzien vorhanden ist.

21. Analyseeinrichtung nach Anspruch 20, **dadurch gekennzeichnet, dass** der Behälter (28) zur Entsorgung von Probenmaterial und verbrauchten Reagenzien im ersten Gehäuse des Applikators (10, 60, 70) und/oder im zweiten Gehäuse des Auslesegerätes (20, 80) angeordnet ist.

22. Analyseeinrichtung nach Anspruch 18, **dadurch gekennzeichnet, dass** das Auslesegerät (20, 80) Mittel (25) zur Förderung des Lösungsmittels durch die Mikrokanäle zum Sensor-Modul und zum Abfallbehälter im Applikator (10, 60, 70) und/oder Auslesegerät (20, 80) enthält.

23. Analyseeinrichtung nach einem der vorhergehenden Ansprüche, **dadurch gekennzeichnet, dass** das Lösungsmittel über die geometrisch platzierte Reagenz-Hilfsstoffmischung (16, 16', ...) geführt wird, so dass eine definierte Lösung entsteht.

24. Analyseeinrichtung nach Anspruch 23, **dadurch gekennzeichnet, dass** das Lösungsmittel auf einer definierten Temperatur gehalten wird.

25. Analyseeinrichtung nach einem der Ansprüche 1 bis 24, **dadurch gekennzeichnet, dass** Mittel zur Einstellung einer definierten Temperatur am Sensor-Modul (15), insbesondere zur Kühlung, vorhanden sind.

26. Analyseeinrichtung nach Anspruch 25, **dadurch gekennzeichnet, dass** ein Peltierelement (30) im zweiten Gehäuse (20, 80) vorhanden ist, das eine Thermostatier-, insbesondere Kühlwirkung auf das Sensor-Modul (15) ausübt.

27. Verwendung der Analyseeinrichtung nach einem der vorhergehenden Ansprüche in der biochemischen Analytik, bei der DNA-Analyse, oder zur Beschleunigung der Abkühlphase in der PCR-Technik.

28. Verwendung der Analyseeinrichtung nach einem der Ansprüche 1 bis 24 in der Lebensmittelüberwachung, in der Umweltmesstechnik, oder in der Forensik.

29. Analyseeinrichtung nach einem der Ansprüche 1 bis 24, in der medizinischen Diagnostik, bei der Blutgas-/Blutelektrolyt-Analyse, bei der Diagnostik von Infektionskrankheiten, bei der Therapiekontrolle, oder zur Früherkennung von Krankheiten.

## Claims

1. Analysis device for use in biochemical analytics, with an applicator (10, 60, 70) for decentralized use, containing a first housing, a microfluidic system (11, 12, 13; 110) and a sensor module (15), which together with a second housing forms a measuring and analysis system, the sensor module having a microfluidically accessible, sensitive area, **characterized in that** in the microfluidic system (11, 12, 13; 110) of the applicator (10, 60, 70) with the sensor module (15) reagents are present in a pre-portioned amount as solid, non-volatile substances and **in that** the microfluidic system (11, 12, 13; 110) has a connection to a solvent reservoir (29, 39) for the purpose of automatic provision of solvent and dissolving of the portioned amount of solid reagent, it being possible for at least one reagent solution prepared from the reagent and the solvent to be fed to the sensitive area (2) of the sensor module (15).

2. Analysis device according to Claim 1, **characterized in that** the sensor module (15) has on the rear side an electrical contacting zone for feeding in and tapping electrical signals.

3. Analysis device according to Claim 1, **characterized in that** the solvent reservoir (29) is arranged in the second housing (20, 80), assigned applicator (10, 60, 70), with the reader.

4. Analysis device according to Claim 1, **characterized in that** the solvent reservoir (39) is arranged in the applicator (10, 60, 70).

5. Analysis device according to Claim 1, **characterized in that** a defined amount of each of various reagents is present in the applicator (10, 60, 70).

6. Analysis device according to Claim 1, **characterized in that** the reagents are stored in a stable form.

7. Analysis device according to Claim 1, **characterized in that** at least one reagent is stored as a pure solid substance.

8. Analysis device according to Claim 1, **characterized in that** at least one reagent is stored in a dissolved or mixed form in an adjuvant.

9. Analysis device according to Claim 8, **characterized in that** the adjuvant is solid.

10. Analysis device according to Claim 9, **characterized in that** the adjuvant is a water-soluble polymer.

11. Analysis device according to Claim 8, **characterized in that** the adjuvant is used for diluting the reagent and/or placing it in a container of the applicator (10, 60, 70) in such a way that it is geometrically defined and has good adhesion.

12. Analysis device according to Claim 11, **characterized in that** the container in the applicator (10, 60, 70) has a defined geometry, for example as a microchannel (11) with a defined cross section and defined length.

13. Analysis device according to Claim 12, **characterized in that** the reagent dissolved in an adjuvant is placed in a defined quantitative gradient along the microchannel (11).

14. Analysis device according to Claim 1, **characterized in that** the applicator (10, 60, 70) with the first housing is a plastic card provided with microfluidic components.

15. Analysis device according to Claim 14, **characterized in that** the plastic card (10, 60, 70) is a chip card.

16. Analysis device according to Claim 15, **characterized in that** the second housing (20, 80) realizes a reader with an evaluation unit, into which the applicator (10, 60, 70), containing the first housing and the sensor module (15), can be introduced.

17. Analysis device according to Claim 16, **characterized in that**, with the prescribed operating mode, the applicator (10, 60, 70) in conjunction with the reader (20, 80) allows reagent and solvent to be brought together.

18. Analysis device according to one of the preceding claims, **characterized in that** the applicator (10, 60, 70) is connected to the reader (20, 80) by means of at least one microchannel (11).

19. Analysis device according to Claim 18, **characterized in that** the solvent reservoir (29) in the reader (20, 80) is formed for receiving the solvent, for example water, for a number of analyses.

20. Analysis device according to Claim 18, **characterized in that** there is a container (28) for the disposal of sample material and used reagents.

21. Analysis device according to Claim 20, **characterized in that** the container (28) for the disposal of sample material and used reagents is arranged in the first housing of the applicator (10, 60, 70) and/or in the second housing of the reader (20, 80).

22. Analysis device according to Claim 18, **characterized in that** the reader (20, 80) contains means (25) for conveying the solvent through the microchannels to the sensor module and to the waste container in the applicator (10, 60, 70) and/or reader (20, 80).

23. Analysis device according to one of the preceding claims, **characterized in that** the solvent is passed over the geometrically placed reagent-adjuvant mixture (16, 16', ...), so that a defined solution is produced.

24. Analysis device according to Claim 23, **characterized in that** the solvent is kept at a defined temperature.

25. Analysis device according to one of Claims 1 to 24, **characterized in that** there are means for setting a defined temperature at the sensor module (15), in particular for cooling.

26. Analysis device according to Claim 25, **characterized in that** in the second housing (20, 80) there is a Peltier element (30), which exerts a thermostatically controlling effect, in particular a cooling effect, on the sensor module (15).

27. Use of the analysis device according to one of the preceding claims in biochemical analytics, or for DNA analysis for speeding up the cooling phase in the PCR technique.

28. Use of the analysis device according to one of Claims 1 to 24 in food monitoring, in environmental measuring technology, or in forensics.

29. Use of the analysis device according to one of Claims 1 to 24 in medical diagnostics, in blood gas/blood electrolyte analysis, in the diagnosis of infectious diseases, or in therapy control for early detection of diseases.

## Revendications

1. Dispositif d'analyse à utiliser en analyse biochimique comprenant un applicateur (10, 60, 70) à utiliser de manière décentralisée et comportant un premier boîtier, un système (11, 12, 13 ; 110) microfluidique, un module (15) de capteur qui forme ensemble avec un deuxième boîtier un système de mesure et d'analyse, le module de capteur ayant une surface sensible accessible microfluidiquement, **caractérisé en ce que**, dans le système (11, 12, 13 ; 110) de l'applicateur (10, 60, 70) ayant le module (15) de capteur, il y a des réactifs en quantité préportionnée sous la forme de substances solides non volatiles et **en ce que** le système (11, 12, 13 ; 110) microfluidique a une communication avec un réservoir (29, 39) de solvant en vue d'un approvisionnement automatique en solvant et d'une dissolution de la quantité préportionnée de réactifs solides, au moins une solution de réactifs préparée à partir du réactif et du solvant pouvant être apportée à la surface (2) sensible du module (15) de capteur.

2. Dispositif d'analyse suivant la revendication 1, **caractérisé en ce que** le module (15) de capteur a, du côté arrière, un champ électrique de contact pour l'envoi et la réception de signaux électriques.

3. Dispositif d'analyse suivant la revendication 1, **caractérisé en ce que** le réservoir (29) à solvant est disposé avec appareil de lecture dans le deuxième boîtier (20, 80) associé à l'applicateur (10, 60, 70).

4. Dispositif d'analyse suivant la revendication 1, **caractérisé en ce que** le réservoir (39) à solvant est disposé dans l'applicateur (10, 60, 70).

5. Dispositif d'analyse suivant la revendication 1, **caractérisé en ce qu'**il y a dans l'applicateur (10, 60, 70), respectivement, une quantité définie de réactifs différents.

6. Dispositif d'analyse suivant la revendication 1, **caractérisé en ce que** les réactifs sont mis en réserve sous une forme stable au stockage.

7. Dispositif d'analyse suivant la revendication 1, **caractérisé en ce qu'**au moins un réactif est mis en réserve sous la forme d'une substance solide pure.

8. Dispositif d'analyse suivant la revendication 1, **caractérisé en ce qu'**au moins un réactif est mis en réserve en étant dissous dans une substance auxiliaire ou en y étant mélangé.

9. Dispositif d'analyse suivant la revendication 8, **caractérisé en ce que** la substance auxiliaire est solide.

10. Dispositif d'analyse suivant la revendication 9, **caractérisé en ce que** la substance auxiliaire est un polymère soluble dans l'eau.

11. Dispositif d'analyse suivant la revendication 8, **caractérisé en ce que** le réactif est dilué et/ou est placé de manière géométriquement définie par la substance auxiliaire en adhérant bien dans un récipient de l'applicateur (10, 60, 70).

12. Dispositif d'analyse suivant la revendication 11, **caractérisé en ce que** le récipient de l'applicateur (10, 60, 70) a une géométrie définie, par exemple sous la forme d'un canal (11) microscopique de section transversale définie et de longueur définie.

13. Dispositif d'analyse suivant la revendication 12, **caractérisé en ce que** le réactif dissous dans une substance auxiliaire est placé suivant un gradient de quantité définie le long du canal (11) microscopique.

14. Dispositif d'analyse suivant la revendication 1, **caractérisé en ce que** l'applicateur (10, 60, 70) ayant le premier boîtier est une carte en matière plastique munie d'éléments microfluidiques.

15. Dispositif d'analyse suivant la revendication 14, **caractérisé en ce que** la carte (10, 60, 70) en matière plastique est une carte à puce.

16. Dispositif d'analyse suivant la revendication 15, **caractérisé en ce que** le deuxième boîtier (20, 80) réalise un appareil de lecture ayant une unité d'exploitation dans lequel l'applicateur (10, 60, 70) comprenant le premier boîtier et le module (15) de capteur peut être introduit.

17. Dispositif d'analyse suivant la revendication 16, **caractérisé en ce que** l'applicateur (10, 60, 70) permet en liaison avec l'appareil (20, 80) de lecture dans un mode de fonctionnement prescrit la réunion du réactif et du solvant.

18. Dispositif d'analyse suivant l'une des revendications précédentes, **caractérisé en ce que** l'applicateur (10, 60, 70) est raccordé à l'appareil (20, 80) de lecture par au moins un canal (11) microscopique.

19. Dispositif d'analyse suivant la revendication 18, **caractérisé en ce que** le réservoir (29) à solvant est constitué dans l'appareil (20, 80) de lecture pour recevoir le solvant, par exemple de l'eau, pour plusieurs analyses.

20. Dispositif d'analyse suivant la revendication 18, **caractérisé en ce qu'**il y a une cuve (28) pour se débarrasser de matières d'échantillons et de réactifs usés.

21. Dispositif d'analyse suivant la revendication 20, **caractérisé en ce que** la cuve (28) pour se débarrasser de matières d'échantillons et de réactifs usés est disposée dans le premier boîtier de l'applicateur (10, 60, 70) et/ou dans le deuxième boîtier de l'appareil (20, 80) de lecture.

22. Dispositif d'analyse suivant la revendication 18, **caractérisé en ce que** l'appareil (20, 80) de lecture a des moyens (25) pour faire aller le solvant par les canaux microscopiques au module de capteur et à la cuve de déchets dans l'applicateur (10, 60, 70) et/ou dans l'appareil (20, 80) de lecture.

23. Dispositif d'analyse suivant l'une des revendications précédentes, **caractérisé en ce que** le solvant passe sur le mélange (16, 16', ...) de réactif et de substance auxiliaire mis en place géométriquement de façon à former une solution définie.

24. Dispositif d'analyse suivant la revendication 23, **caractérisé en ce que** le solvant est maintenu à une température définie.

25. Dispositif d'analyse suivant l'une des revendications 1 à 24, **caractérisé en ce qu'**il y a des moyens d'établissement d'une température définie sur le module (15) de capteur, notamment de refroidissement.

26. Dispositif d'analyse suivant la revendication 25, **caractérisé en ce qu'**il y a un élément (30) à effet Peltier dans le deuxième boîtier (20, 80) qui exerce un effet de thermostatisation, notamment de refroidissement, sur le module (15) de capteur.

27. Utilisation du dispositif d'analyse suivant l'une des revendications précédentes en analyse biochimique.

28. Utilisation du dispositif d'analyse suivant l'une des revendications 1 à 24 pour le contrôle de denrées alimentaires, dans la technique de mesure de l'environnement ou dans les techniques de preuves en matière judiciaire.

29. Utilisation du dispositif d'analyse suivant l'une des revendications 1 à 24 dans le diagnostic médical pour l'analyse de gaz du sang/électrolyte du sang, pour le diagnostic de maladies infectieuses, pour le contrôle thérapeutique ou pour le diagnostic précoce de maladies.
